# EUROPEAN PATENT SPECIFICATION

(11) **EP 4 582 944 B1**
(45) Date of publication and mention of the grant of the patent: **18.02.2026**
(21) Application number: 24204822.1
(22) Date of filing: 04.10.2024
(51) Int. Cl.: G06F 9/455, G06F 9/50, G06F 9/54, G06F 16/182, G06F 16/188

(54) **OFFLOADING METHOD AND DEVICE FOR SHARED DIRECTORY FILE SYSTEM BETWEEN HOST AND VIRTUAL MACHINE**
VERFAHREN UND VORRICHTUNG ZUM AUSLAGERN VON DATEN FÜR EIN GEMEINSAM GENUTZTES VERZEICHNIS-DATEISYSTEM ZWISCHEN EINEM HOST UND EINER VIRTUELLEN MASCHINE
PROCÉDÉ ET DISPOSITIF DE DÉLESTAGE POUR SYSTÈME DE FICHIERS DE RÉPERTOIRE PARTAGÉ ENTRE UN HÔTE ET UNE MACHINE VIRTUELLE

(30) Priority: 03.01.2024 CN 202410012107
(43) Date of publication of application: 09.07.2025
(73) Proprietor: Beijing Volcano Engine Technology Co., Ltd., Beijing 100190 (CN)
(72) Inventor: LI, Zebin, Beijing, 100028 (CN); FANG, Ying, Beijing, 100028 (CN)
(74) Representative: Marks & Clerk LLP

(56) References cited:
- WO-A1-2017/026931
- US-A1- 2021 191 776

## Description

### TECHNICAL FIELD

Embodiments of the present disclosure relate to the field of virtual machine technologies, and in particular, to an offloading method and device for a shared directory file system between a host and a virtual machine.

### BACKGROUND

In the field of virtual machine technologies, a virtual machine is a virtualized device running on a host, and an application may run on the virtual machine. In addition to the virtual machine, the host also needs to run some other software, for example, monitoring software for the virtual machine and management software on the host.

In prior art, various software on the host calls various resources of the host based on an operating system of the host, for example, display resources, a central processing unit (CPU), and storage resources. During running, the software can implement communication between the software through the operating system of the host.

However, the above solution has a problem of poor performance of the host.

US2021/191776A1 describes methods, devices, systems, and procedures in a computing system for capturing a configuration state of an operating system executing on a central processing unit (CPU), and offloading memory management tasks, based on the configuration state, to a resource management unit such as a system-on-a-chip (SoC). The resource management unit identifies a status of a resource requiring memory swapping based on the captured configuration state of the operating system. The resource management unit then swaps the memory to alleviate the CPU from processing the swap thereby improving overall computing system performance.

WO2017/026931A1 relates to an apparatus for and method of implementing input/output in a host in a virtualized environment, the host comprising a kernel space and a user space, the user space comprising a virtual machine, a user space virtual machine manager, a paravirtualized driver and a configuration agent, and the kernel space comprising a virtual function input/output, VFIO, an NIC driver and a kernel space virtual machine manager. The method comprises dividing instructions to be sent to the input/output device into configuration control instructions and data, transmitting the configuration control instructions to a configuration agent. At the configuration agent, the configuration control instructions are received translated to a form usable at a Virtual Function input/output, VFIO, and/or Network Interface Card, NIC, driver and transmitting to the configuration control. In the kernel space the configuration instructions are used to configure the input/output device. The method further comprises transferring the data to a direct memory access module and using the direct memory access module to transfer the data directly to the input/output device.

### SUMMARY

Embodiments of the present disclosure provide an offloading method and device for a shared directory file system between a host and a virtual machine, which can improve performance of the host and ensure normal directory sharing function of the host. The invention is defined by the appended independent claims. The dependent claims define preferred embodiments.

In a first aspect, an embodiment of the present disclosure provides an offloading method for a shared directory file system between a host and a virtual machine, the method including:
offloading a virtual machine user file system VIRTIOFS process on a host to a data processing unit (DPU), to cause the DPU to be responsible for running the VIRTIOFS process and maintaining a shared directory file system related to the VIRTIOFS process;
in a case that the VIRTIOFS process on the host is offloaded to the DPU, establishing, through a DMA driver front-end controller configured in a first operating system in the host and a DMA driver back-end controller configured in a second operating system in the DPU, a DMA communication channel for the VIRTIOFS process to communicate with the virtual machine on the host; and
controlling, through the DPU, the VIRTIOFS process to communicate with the virtual machine deployed on the host based on the DMA communication channel, to implement access to and data processing of the shared directory file system.

In a second aspect, an embodiment of the present disclosure provides an offloading apparatus for a shared directory file system between a host and a virtual machine, the apparatus including:
an offloading module, configured to offload a virtual machine user file system (VIRTIOFS) process on a host to a data processing unit (DPU) to cause the DPU to be responsible for running the VIRTIOFS process and maintaining a shared directory file system related to the VIRTIOFS process;
a channel establishing module, configured to, in a case that the VIRTIOFS process on the host is offloaded to the DPU, establish, through a DMA driver front-end controller configured in a first operating system in the host and a DMA driver back-end controller configured in a second operating system in the DPU, a DMA communication channel for the VIRTIOFS process to communicate with the virtual machine on the host; and
an access processing module, configured to control, through the DPU, the VIRTIOFS process to communicate with the virtual machine deployed on the host based on the DMA communication channel, to implement access to and data processing of the shared directory file system.

In a third aspect, an embodiment of the present disclosure provides an electronic device, including: at least one processor and a memory;
where the memory stores computer-executable instructions; and
the at least one processor executes the computer-executable instructions stored in the memory, to cause the electronic device to implement the method according to the first aspect.

In a fourth aspect, an embodiment of the present disclosure provides a computer-readable storage medium, where the computer-readable storage medium stores computer-executable instructions, and when a processor executes the computer-executable instructions, a computing device is caused to implement the method according to the first aspect.

In a fifth aspect, an embodiment of the present disclosure provides a computer program, where the computer program is used to implement the method according to the first aspect.

Embodiments of the present disclosure provide an offloading method and device for a shared directory file system between a host and a virtual machine. The method includes: offloading a VIRTIOFS process on a host to a DPU to cause the DPU to be responsible for running the VIRTIOFS process and maintaining the shared directory file system related to the VIRTIOFS process; in a case that the VIRTIOFS process on the host is offloaded to the DPU, establishing, through a DMA driver front-end controller configured in a first operating system in the host and a DMA driver back-end controller configured in a second operating system in the DPU, a DMA communication channel for the VIRTIOFS process to communicate with the virtual machine on the host; and controlling, through the DPU, the VIRTIOFS process to communicate with the virtual machine deployed on the host based on the DMA communication channel, to implement access to and data processing of the shared directory file system. According to the embodiments of the present disclosure, the VIRTIOFS process and the shared directory can be migrated from the host to the DPU, and communication between software on two operating systems can be implemented through a direct memory access technology, to ensure implementation of the shared directory. Therefore, performance of the host and/or the virtual machine can be improved on the basis of ensuring normal functions of the host and/or the virtual machine.

### BRIEF DESCRIPTION OF DRAWINGS

In order to more clearly describe the technical solutions in the embodiments of the present disclosure or in the prior art, the following briefly introduces the accompanying drawings required for describing the embodiments or the prior art. Apparently, the accompanying drawings in the following description show some embodiments of the present disclosure, and a person of ordinary skill in the art may still derive other drawings from these accompanying drawings without creative efforts.
FIG. 1 is a schematic diagram of a principle of implementing a shared directory in prior art.
FIG. 2 is a schematic diagram of a principle that a shared directory cannot be implemented after a data processing unit is set, according to an embodiment of the present disclosure.
FIG. 3 is a schematic diagram of software and hardware distribution of a host according to an embodiment of the present disclosure.
FIG. 4 is a flowchart of steps of an offloading method for a shared directory file system between a host and a virtual machine according to an embodiment of the present disclosure.
FIG. 5 is a flowchart of steps of another offloading method for a shared directory file system between a host and a virtual machine according to an embodiment of the present disclosure.
FIG. 6 is a block diagram of a structure of an offloading apparatus for a shared directory file system between a host and a virtual machine according to an embodiment of the present disclosure.
FIG. 7 is a block diagram of a structure of an electronic device according to an embodiment of the present disclosure.

### DESCRIPTION OF EMBODIMENTS

In order to make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present invention, which is defined by the appended independent claims.

The embodiments of the present disclosure may be applied to the field of virtual machine technologies. In the field of virtual machine technologies, device hardware may be simulated through software to serve as virtual hardware of a virtual machine. For example, in some kernel-based virtual machine (KVM) technical solutions, device hardware simulation may be implemented through a quick emulator (QEMU).

A host is a physical device where a virtual machine is located. The virtual machine runs depending on the host, and the virtual machine may be considered as a process on the host. One or more virtual machines may run on a host. A user program may run on the host or the virtual machine imperceptibly. In the embodiments of the present disclosure, a user program running on the host may be referred to as a host application, and a user program running on the virtual machine may be referred to as a virtual machine application.

It can be learned that there is a large quantity of software running on the host, which reduces performance of the host. Performance of the host further causes poor performance of the virtual machine.

To solve the above technical problem, according to the embodiments of the present disclosure, a data processing unit (DPU) may be set on the host, to migrate some software on the host to the data processing unit for running. In this way, performance of the host can be improved.

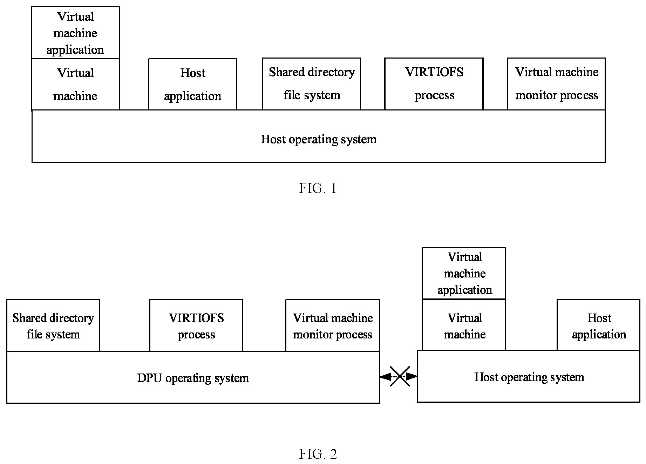

However, after the DPU is set, because operating systems running on the DPU and the host are different, software on the DPU and software on the host cannot communicate, which affects some functions of the host and/or the virtual machine. For example, sharing a directory between the host and the virtual machine is a common scenario, and is widely applied in a secure container (Kata Container) scenario. For example, in a secure container scenario, some configuration files are usually stored in a shared directory, and configuration information in the configuration files is written by the operating system of the host and read by the virtual machine. Before the DPU is set, the scenario of a shared directory can be normally implemented. However, after the DPU is added, the scenario of a shared directory may fail to be implemented. The implementation of the scenario of a shared directory is described in detail below with reference to FIG. 1 and FIG. 2.

FIG. 1 is a schematic diagram of a principle of implementing a shared directory in the prior art, and FIG. 2 is a schematic diagram of a principle that a shared directory cannot be implemented after a data processing unit is set, according to an embodiment of the present disclosure.

Referring to FIG. 1, in the prior art, a host is not provided with a DPU, and a virtual machine, a virtual machine application, a host application, a shared directory file system, a VIRTIOFS process, and a virtual machine monitor process all run on an operating system of the host. These software can communicate with each other through the operating system of the host. For example, in the scenario of a shared directory, the host may write data into a configuration file (the shared directory file system) in the shared directory through the operating system of the host, and the virtual machine application may access the shared directory file system through the operating system of the host.

Referring to FIG. 2, after the DPU is set, any software on the operating system of the host shown in FIG. 1 may be migrated to the operating system of the DPU shown in FIG. 2. For example, in FIG. 2, the shared directory file system, the VIRTIOFS process, and the virtual machine monitor process are migrated to the operating system of the DPU. Because the operating system of the host and the operating system of the DPU are different, the software on the operating system of the host and the software on the operating system of the DPU cannot directly communicate through the operating systems. For example, in the scenario of a shared directory, the virtual machine application cannot access the shared directory file system on the operating system of the DPU through the operating system of the host, resulting in a failure to implement the shared directory.

According to the embodiments of the present disclosure, communication between software on two operating systems is implemented through a direct memory access (DMA) technology, to ensure implementation of the shared directory. Therefore, performance of the host and/or the virtual machine can be improved on the basis of ensuring normal functions of the host and/or the virtual machine.

The following describes in detail the technical solutions of the embodiments of the present disclosure and how the technical solutions of the present disclosure solve the above technical problems with reference to specific embodiments. The following specific embodiments may be combined with each other, and for the same or similar concepts or processes, some embodiments may not be described again. The embodiments of the present disclosure are described below with reference to the accompanying drawings.

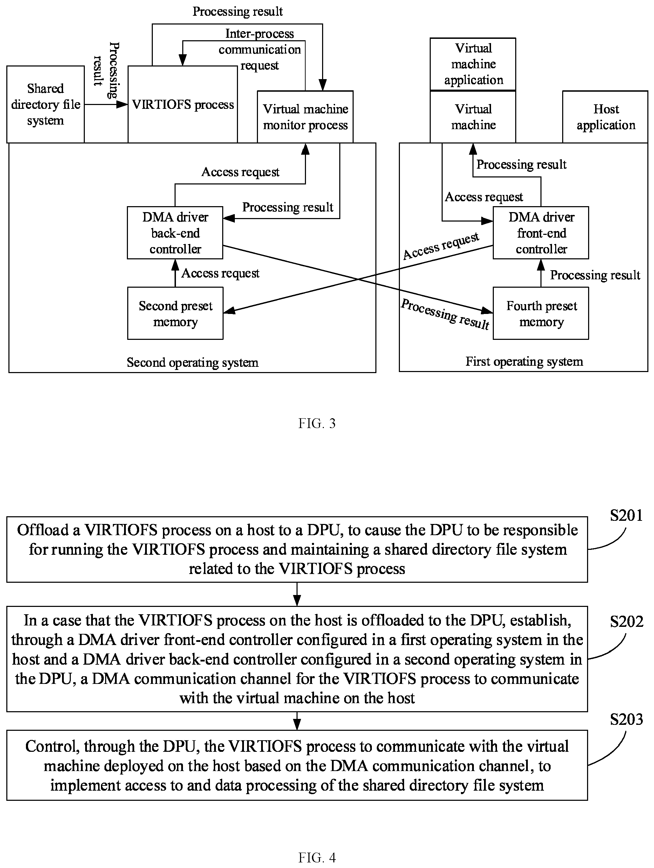

FIG. 3 is a schematic diagram of software and hardware distribution of a host according to an embodiment of the present disclosure. Referring to FIG. 3, a DPU is set on the host. Different operating systems run on the host and the DPU, which are respectively referred to as the operating system of the host and the operating system of the DPU. In the embodiments of the present disclosure, the operating system of the host is referred to as a first operating system, and the operating system of the DPU is referred to as a second operating system. In the same way as shown in FIG. 2, the shared directory file system, the VIRTIOFS process, and the virtual machine monitor process are migrated from the host to the DPU, and the virtual machine, the virtual machine application, and the host application remain on the host.

The DPU may be connected to the host through a hardware interface to run as a part of the host. The processing performance of the DPU is usually lower than that of a central processing unit (CPU), and thus some simple tasks with a low load level may run on the DPU.

It should be noted that the first operating system and the second operating system are any two different operating systems, and the first operating system may be different in different scenarios. For example, in a KVM solution, the first operating system is a Linux operating system. and in some other solutions, the first operating system may also be a Unix operating system. The embodiments of the present disclosure do not limit the first operating system and the second operating system.

In the embodiments of the present disclosure, the first operating system and the second operating system are used as step execution bodies for description.

FIG. 4 is a flowchart of steps of an offloading method for a shared directory file system between a host and a virtual machine according to an embodiment of the present disclosure. Referring to FIG. 4, the offloading method for a shared directory file system between a host and a virtual machine includes the following steps.

S201, offload a VIRTIOFS process on a host to a DPU, to cause the DPU to be responsible for running the VIRTIOFS process and maintaining the shared directory file system related to the VIRTIOFS process.

The offloading herein may be understood as migration, that is, a VIRTIOFS (Virtual Host User File System) process originally set and running on the host is migrated to the DPU. Therefore, before offloading, the VIRTIOFS process is run by the first operating system of the host; and after offloading, the VIRTIOFS process is run by the second operating system of the DPU.

The VIRTIOFS process is used for file management of the shared directory file system, and the VIRTIOFS process runs in a user mode. The VIRTIOFS process simulates a device through a VHOST-USER method. The VHOST-USER method is a device simulation method, which is developed from VIRTIO (another device simulation method) to a VHOST (Virtual Host) simulation method, and then from the VHOST to the VHOST-USER. In these three solutions, an abstraction of a real device, referred to as a front-end device, needs to be presented in the virtual machine. A request sent by a virtual machine application reaches the front-end device through a front-end driver of the front-end device. After receiving the request, the front-end device forwards the request to a back-end device, and the back-end device is implemented on the host. However, the difference between the three solutions is that the implementation manner and location of the back-end device are different. The back-end device of VIRTIO is in a QEMU process, the back-end device of VHOST is in a kernel of the first operating system of the host, and the back-end device of VHOST-USER is in an independent user-mode process of the first operating system of the host. The VHOST-USER places the back-end device in an independent user-mode process, so the VHOST-USER has high flexibility and scalability, and thus is widely applied.

S202, in a case that the VIRTIOFS process on the host is offloaded to the DPU, establish, through a DMA driver front-end controller configured in a first operating system in the host and a DMA driver back-end controller configured in a second operating system in the DPU, a DMA communication channel for the VIRTIOFS process to communicate with the virtual machine on the host.

The DMA driver front-end controller may be understood as a DMA driving program configured in the first operating system, and is configured to enable the first operating system to directly access a memory. The DMA driver back-end controller may be understood as a DMA driving program configured in the second operating system, and is configured to enable the second operating system to directly access a memory. The DMA driving program can access the memory to read data in the memory or write data into the memory.

According to the embodiments of the present disclosure, memory access may be implemented through the two DMA driving programs, and read and write of a second preset memory and read and write of a fourth preset memory can be accurately implemented, which helps improve memory access accuracy.

The DMAcommunication channel is used to implement communication between the VIRTIOFS process and the virtual machine based on memory copying.

Optionally, the DMA driver front-end controller is a kernel program of the first operating system, and the DMA driver back-end controller is a kernel program of the second operating system. In this way, memory read and write performance can be improved, so that communication efficiency between the first operating system and the second operating system is further improved. In addition, the kernel program usually has high permissions, and can access any memory in the corresponding operating system without applying for permissions, to avoid calling another program to apply for permissions.

S203, control, through the DPU, the VIRTIOFS process to communicate with the virtual machine deployed on the host based on the DMA communication channel, to implement access to and data processing of the shared directory file system.

The communication herein includes: (1) the virtual machine sends an access request to send the access request to the VIRTIOFS process through the DMA communication channel, to access the shared directory file system; and (2) the VIRTIOFS process sends a processing result of the access request to the virtual machine through the DMA communication channel. The access request herein may be initiated by a virtual machine application in the virtual machine, and the virtual machine application runs on the first operating system. The virtual machine application is any application.

The access may be reading, writing, modification, deletion, and the like. The embodiments of the present disclosure do not limit this. The access request may specify the shared directory file system to be read from the shared directory, and the row and/or column to be read from the shared directory file system. In a directory sharing scenario, the shared directory stores a configuration file as the shared directory file system, and configuration information in the configuration file is written by the first operating system, so that the virtual machine application uses the configuration information in the configuration file. In this way, running flexibility of the virtual machine application can be improved.

In actual applications, because the processing complexity corresponding to the virtual machine is relatively high, usually, the virtual machine, the virtual machine application, and the host application remain running on the first operating system, and an application with low processing complexity, for example, the virtual machine monitor process, the shared directory file system, the VIRTIOFS process, and the like as shown in FIG. 3 are migrated to the second operating system of the DPU for running. That is, the first setting manner is used, and in this way, software with high complexity runs on the CPU of the host, and software with low complexity runs on the DPU of the host, which can improve performance of the host and/or the virtual machine as much as possible.

In some implementations, a first preset memory may be set in the first operating system, and a second preset memory may be set in the second operating system. Therefore, an access request of the virtual machine is copied from the first preset memory to the second preset memory through the DMA communication channel, to forward, through the second operating system, the access request to the VIRTIOFS process, to cause the VIRTIOFS process to access the shared directory file system.

The first preset memory is any memory in the first operating system that stores the access request, and the second preset memory is any memory in the second operating system that is used to store the access request. Because the virtual machine runs on the first operating system of the host, when the virtual machine needs to access the shared directory file system, the virtual machine generates an access request and stores the access request in the first preset memory. In this case, the first operating system may call the DMA driver front-end controller to copy the access request in the first preset memory to the second preset memory through the DMA communication channel. In this way, the access request of the virtual machine is transferred from the first operating system to the second operating system.

When receiving the access request, the second operating system calls the DMA driver back-end controller to read the access request from the second preset memory and send to the VIRTIOFS process, and the VIRTIOFS process may access the shared directory file system based on the access request.

Optionally, the forwarding, through the second operating system, the access request to the VIRTIOFS process may include: converting, through a virtual machine monitor process of the second operating system, the access request into an inter-process communication request based on the second operating system, to send to the VIRTIOFS process.

The virtual machine monitor process here may convert the access request into a unix domain socket request as the inter-process communication request. The VIRTIOFS process recognizes the inter-process communication request to perform processing successfully.

Correspondingly, after the VIRTIOFS process finishes processing the access request and obtains a processing result, the processing result is returned to the second operating system through the virtual machine monitor process, to cause the second operating system to call the DMA driver front-end controller to send the processing result to the first operating system.

It can be learned from the description that to transfer the access request, the first preset memory is set in the first operating system, and the second preset memory is set in the second operating system. Correspondingly, to transfer the processing result of the access request, a third preset memory may be further set in the second operating system, and a fourth preset memory may be set in the first operating system. Therefore, the processing result of the access request may be copied from the third preset memory to the fourth preset memory through the DMA communication channel, to forward, through the first operating system, the processing result to the virtual machine.

The third preset memory is any memory in the second operating system that stores the processing result, and the fourth preset memory is any memory in the first operating system that is used to store the processing result. Because the shared directory file system and the VIRTIOFS process run on the second operating system of the DPU, when the VIRTIOFS process generates the processing result for the access request, the processing result is stored in the third preset memory through the virtual machine monitor process. In this case, the second operating system may call the DMA driver back-end controller to copy the processing result in the third preset memory to the fourth preset memory through the DMA communication channel. In this way, the processing result of the access request is transferred from the second operating system to the first operating system.

When receiving the processing result, the first operating system reads the processing result from the fourth preset memory through the DMA driver front-end controller, and sends the processing result to the virtual machine, so that the virtual machine can perform subsequent processing based on the processing result. For example, when the shared directory file system is a configuration file, the processing result then includes configuration data read by the virtual machine, to perform configuration processing on the virtual machine or the virtual machine application based on the configuration data.

In conclusion, according to the embodiments of the present disclosure, the second preset memory may be set in the second operating system, and the fourth preset memory may be set in the first operating system, to implement communication between the first operating system and the second operating system through direct memory access to the second preset memory and the fourth preset memory, and further implement communication between software running on the two operating systems.

It may be understood that the foregoing second preset memory may be one or more, and the fourth preset memory may also be one or more. When there is one second preset memory, all applications may share the second preset memory. Similarly, all applications may share one fourth preset memory. To avoid errors caused by sharing the preset memory, a plurality of second preset memories and a plurality of fourth preset memories may be set, so that different applications use their own second preset memories and fourth preset memories respectively.

Based on the plurality of second preset memories and the plurality of fourth preset memories, in some optional implementations, before copying, through the DMA communication channel, the access request of the virtual machine from the first preset memory to the second preset memory, target application information may be extracted from the access request through the first operating system, to determine, through the first operating system and based on the target application information, the second preset memory corresponding to the access request.

Correspondingly, before copying, through the DMA communication channel, the processing result of the access request from the third preset memory to the fourth preset memory, the target application information may also be extracted from the access request through the second operating system, to determine, through the second operating system and based on the target application information, the fourth preset memory corresponding to the processing result.

The target application information may be an identifier, a type, or the like of a target application. The identifier may be a name or a number. The target application is a virtual machine application in the virtual machine. According to the embodiments of the present disclosure, the second preset memory and the fourth preset memory may be determined based on the target application information, to map one or more pieces of target application information to the same second preset memory and the same fourth preset memory. That is, one or more different target applications use the same second preset memory and the same fourth preset memory, or one or more types of target applications use the same second preset memory and the same fourth preset memory.

The mapping relationship between the target application information and the preset memory in the embodiments of the present disclosure may be flexibly set, which is not specifically limited in the embodiments of the present disclosure.

A typical application scenario of the embodiments of the present disclosure is a directory sharing scenario in VHOST-USER, and the virtual machine includes a virtual machine applied to a secure container scenario. Referring to FIG. 3, in the directory sharing scenario of the embodiments of the present disclosure, the shared directory file system, the VIRTIOFS process, and the virtual machine monitor process are all set on the DPU, and run depending on the second operating system of the DPU. These software have low processing complexity and can be processed by the DPU. The virtual machine application, the virtual machine, and the host application are set on the operating system of the host, and run depending on the first operating system of the host.

Therefore, to implement directory sharing between the host and the virtual machine, the process of accessing the shared directory file system includes two phases:

In a first phase, the virtual machine application initiates an access request, to cause the DMA driver front-end controller in the host to copy the access request into a second preset memory. The DMA driver back-end controller in the DPU may obtain the access request from the second preset memory, to send the access request to the virtual machine monitor process to convert the access request into an inter-process communication request, and access the shared directory file system through the VIRTIOFS process, that is, to obtain data from the shared directory file system as a processing result.

In a second phase, the VIRTIOFS process sends the processing result to the DMA driver back-end controller of the DPU through the virtual machine monitor process, to cause the DMA driver back-end controller to copy the processing result into a fourth preset memory, and the DMA driver front-end controller of the host reads the processing result from the fourth preset memory to return the processing result to the virtual machine application.

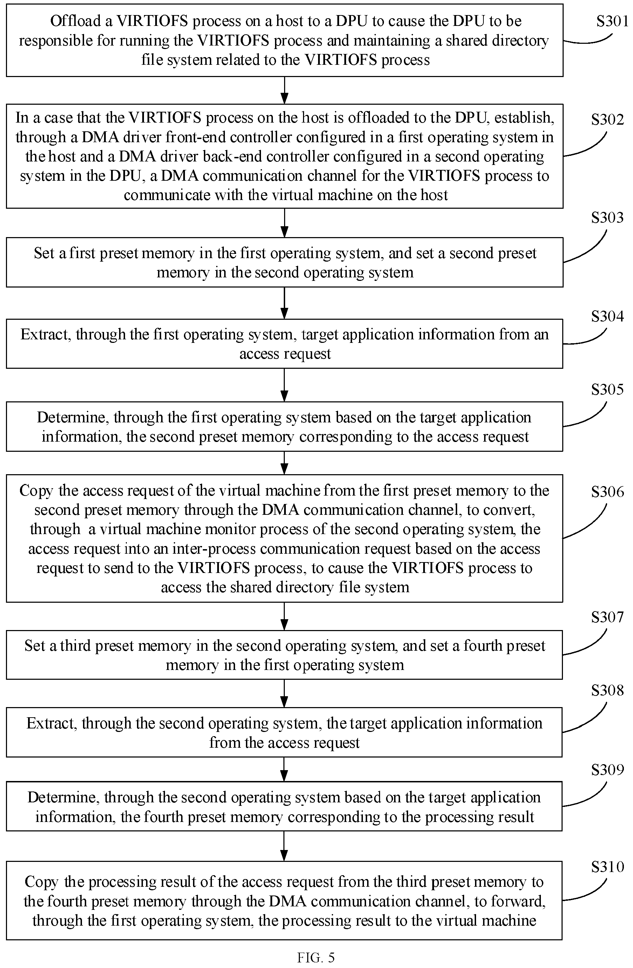

FIG. 5 is a flowchart of steps of another offloading method for a shared directory file system between a host and a virtual machine according to an embodiment of the present disclosure. As shown in FIG. 5, the offloading method for a shared directory file system between a host and a virtual machine may include the following steps.

S301, offload a VIRTIOFS process on a host to a DPU, to cause the DPU to be responsible for running the VIRTIOFS process and maintaining the shared directory file system related to the VIRTIOFS process.

S302, in a case that the VIRTIOFS process on the host is offloaded to the DPU, establish, through a DMA driver front-end controller configured in a first operating system in the host and a DMA driver back-end controller configured in a second operating system in the DPU, a DMA communication channel for the VIRTIOFS process to communicate with the virtual machine on the host.

S303, set a first preset memory in the first operating system, and set a second preset memory in the second operating system.

S304, extract, through the first operating system, target application information from an access request.

S305, determine, through the first operating system based on the target application information, the second preset memory corresponding to the access request.

S306, copy the access request of the virtual machine from the first preset memory to the second preset memory through the DMA communication channel, to convert, through a virtual machine monitor process of the second operating system, the access request into an inter-process communication request based on the second operating system to send to the VIRTIOFS process, to cause the VIRTIOFS process to access the shared directory file system.

S307, set a third preset memory in the second operating system, and set a fourth preset memory in the first operating system.

S308, extract, through the second operating system, the target application information from the access request.

S309, determine, through the second operating system based on the target application information, the fourth preset memory corresponding to the processing result.

S310, copy the processing result of the access request from the third preset memory to the fourth preset memory through the DMA communication channel, to forward, through the first operating system, the processing result to the virtual machine.

It should be noted that the steps shown in FIG. 5 may be flexibly adjusted in sequence independently of each other. In addition, for the above offloading method for a shared directory file system between a host and a virtual machine, reference may be made to corresponding description of the offloading method for a shared directory file system between a host and a virtual machine shown in FIG. 4, and details are not described herein again.

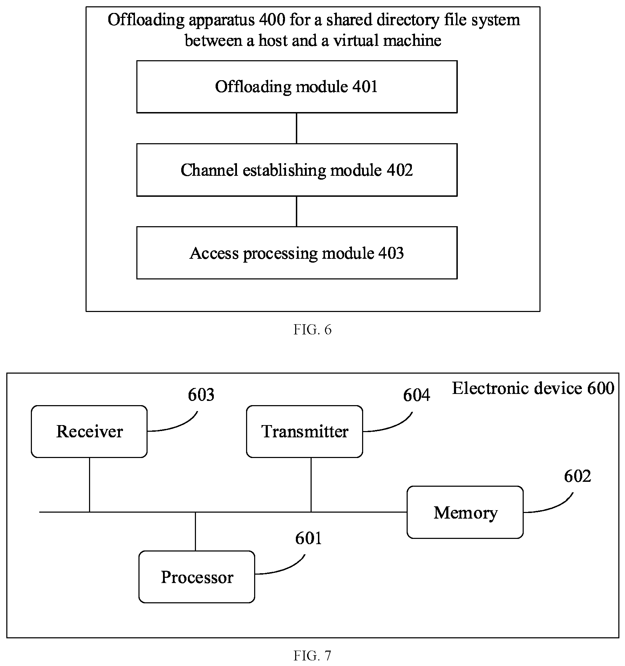

Corresponding to the offloading method for a shared directory file system between a host and a virtual machine in the foregoing embodiments, FIG. 6 is a block diagram of a structure of an offloading apparatus for a shared directory file system between a host and a virtual machine according to an embodiment of the present disclosure. For ease of description, only parts related to the embodiments of the present disclosure are shown. As shown in FIG. 6, the offloading apparatus 400 for a shared directory file system between a host and a virtual machine includes:
an offloading module 401, configured to offload a virtual machine user file system VIRTIOFS process on a host to a data processing unit (DPU), to cause the DPU to be responsible for running the VIRTIOFS process and maintaining the shared directory file system related to the VIRTIOFS process;
a channel establishing module 402, configured to, in a case that the VIRTIOFS process on the host is offloaded to the DPU, establish, through a DMA driver front-end controller configured in a first operating system in the host and a DMA driver back-end controller configured in a second operating system in the DPU, a DMA communication channel for the VIRTIOFS process to communicate with the virtual machine on the host; and
an access processing module 403, configured to control, through the DPU, the VIRTIOFS process to communicate with the virtual machine deployed on the host based on the DMA communication channel, to implement access to and data processing of the shared directory file system.

Optionally, the access processing module 403 is further configured to:
set a first preset memory in the first operating system, and set a second preset memory in the second operating system; and copy an access request of the virtual machine from the first preset memory to the second preset memory through the DMA communication channel, to forward, through the second operating system, the access request to the VIRTIOFS process, to cause the VIRTIOFS process to access the shared directory file system.

Optionally, the access processing module 403 is further configured to:
set a third preset memory in the second operating system, and set a fourth preset memory in the first operating system; and copy a processing result of the access request from the third preset memory to the fourth preset memory through the DMA communication channel, to forward, through the first operating system, the processing result to the virtual machine.

Optionally, the access processing module 403 is further configured to:
convert, through a virtual machine monitor process of the second operating system, the access request into an inter-process communication request based on the second operating system to send to the VIRTIOFS process.

Optionally, the DMA driver front-end controller is a kernel program of the first operating system, and the DMA driver back-end controller is a kernel program of the second operating system.

Optionally, the apparatus further includes:
a first application determining module, configured to extract, through the first operating system, target application information from the access request before the access request of the virtual machine is copied from the first preset memory to the second preset memory through the DMA communication channel;
a first memory determining module, configured to determine, through the first operating system based on the target application information, the second preset memory corresponding to the access request;
a second application determining module, configured to extract, through the second operating system, the target application information from the access request before the processing result of the access request is copied from the third preset memory to the fourth preset memory through the DMA communication channel; and
a second memory determining module, configured to determine, through the second operating system based on the target application information, the fourth preset memory corresponding to the processing result.

Optionally, the virtual machine includes a virtual machine applied to a secure container scenario.

The offloading apparatus for a shared directory file system between a host and a virtual machine provided in this embodiment may be used to perform the technical solution of the offloading method for a shared directory file system between a host and a virtual machine in the foregoing embodiments. The implementation principle and technical effect are similar, and details are not described herein again in this embodiment.

FIG. 7 is a block diagram of a structure of an electronic device according to an embodiment of the present disclosure. The electronic device 600 includes a memory 602 and at least one processor 601.

The memory 602 stores computer-executable instructions.

The at least one processor 601 executes the computer-executable instructions stored in the memory 602, to cause the electronic device 600 to implement the offloading method for a shared directory file system between a host and a virtual machine described above.

In addition, the electronic device 600 may further include a receiver 603 and a transmitter 604. The receiver 603 is configured to receive information from another device or apparatus, and forward the information to the processor 601. The transmitter 604 is configured to send information to another device or apparatus.

In a first example of a first aspect, an embodiment of the present disclosure provides an offloading method for a shared directory file system between a host and a virtual machine, the method including:
offloading a virtual machine user file system VIRTIOFS process on a host to a data processing unit (DPU), to cause the DPU to be responsible for running the VIRTIOFS process and maintaining the shared directory file system related to the VIRTIOFS process;
in a case that the VIRTIOFS process on the host is offloaded to the DPU, establishing, through a DMA driver front-end controller configured in a first operating system in the host and a DMA driver back-end controller configured in a second operating system in the DPU, a DMA communication channel for the VIRTIOFS process to communicate with the virtual machine on the host;
controlling, through the DPU, the VIRTIOFS process to communicate with the virtual machine deployed on the host based on the DMA communication channel, to implement access to and data processing of the shared directory file system.

Based on the first example of the first aspect, in a second example of the first aspect, the controlling, through the DPU, the VIRTIOFS process to communicate with the virtual machine deployed on the host based on the DMA communication channel includes:
setting a first preset memory in the first operating system, and setting a second preset memory in the second operating system; and
copying an access request of the virtual machine from the first preset memory to the second preset memory through the DMA communication channel, to forward, through the second operating system, the access request to the VIRTIOFS process, to cause the VIRTIOFS process to access the shared directory file system.

Based on the second example of the first aspect, in a third example of the first aspect, the method further includes:
setting a third preset memory in the second operating system, and setting a fourth preset memory in the first operating system; and
copying a processing result of the access request from the third preset memory to the fourth preset memory through the DMA communication channel, to forward, through the first operating system, the processing result to the virtual machine.

Based on the second example of the first aspect, in a fourth example of the first aspect, the forwarding, through the second operating system, the access request to the VIRTIOFS process includes:
converting, through a virtual machine monitor process of the second operating system, the access request into an inter-process communication request based on the second operating system to send to the VIRTIOFS process.

Based on the first to fourth examples of the first aspect, in a fifth example of the first aspect, the DMA driver front-end controller is a kernel program of the first operating system, and the DMA driver back-end controller is a kernel program of the second operating system.

Based on the fourth example of the first aspect, in a sixth example of the first aspect, before the copying the access request of the virtual machine from the first preset memory to the second preset memory through the DMA communication channel, the method further includes:
extracting, through the first operating system, target application information from the access request; and
determining, through the first operating system based on the target application information, the second preset memory corresponding to the access request.

Before the copying the processing result of the access request from the third preset memory to the fourth preset memory through the DMA communication channel, the method further includes:
extracting, through the second operating system, the target application information from the access request; and
determining, through the second operating system based on the target application information, the fourth preset memory corresponding to the processing result.

Based on the first example of the first aspect, in a seventh example of the first aspect, the virtual machine includes a virtual machine applied to a secure container scenario.

In a first example of a second aspect, an embodiment of the present disclosure provides an offloading apparatus for a shared directory file system between a host and a virtual machine, the apparatus including:
an offloading module, configured to offload a virtual machine user file system (VIRTIOFS) process on a host to a data processing unit (DPU), to cause the DPU to be responsible for running the VIRTIOFS process and maintaining the shared directory file system related to the VIRTIOFS process;
a channel establishing module, configured to, in a case that the VIRTIOFS process on the host is offloaded to the DPU, establish, through a DMA driver front-end controller configured in a first operating system in the host and a DMA driver back-end controller configured in a second operating system in the DPU, a DMA communication channel for the VIRTIOFS process to communicate with the virtual machine on the host; and
an access processing module, configured to control, through the DPU, the VIRTIOFS process to communicate with the virtual machine deployed on the host based on the DMA communication channel, to implement access to and data processing of the shared directory file system.

Based on the first example of the second aspect, in a second example of the second aspect, the access processing module is further configured to:
set a first preset memory in the first operating system, and set a second preset memory in the second operating system; and
copy an access request of the virtual machine from the first preset memory to the second preset memory through the DMA communication channel, to forward, through the second operating system, the access request to the VIRTIOFS process, to cause the VIRTIOFS process to access the shared directory file system.

Based on the second example of the second aspect, in a third example of the second aspect, the access processing module is further configured to:
set a third preset memory in the second operating system, and set a fourth preset memory in the first operating system; and
copy a processing result of the access request from the third preset memory to the fourth preset memory through the DMA communication channel, to forward, through the first operating system, the processing result to the virtual machine.

Based on the second example of the second aspect, in a fourth example of the second aspect, the access processing module is further configured to:
convert, through a virtual machine monitor process of the second operating system, the access request into an inter-process communication request based on the second operating system, to send to the VIRTIOFS process.

Based on the first to fourth examples of the second aspect, in a fifth example of the second aspect, the DMA driver front-end controller is a kernel program of the first operating system, and the DMA driver back-end controller is a kernel program of the second operating system.

Based on the fourth example of the second aspect, in a sixth example of the second aspect, the apparatus further includes:
a first application determining module, configured to extract, through the first operating system, target application information from the access request before the access request of the virtual machine is copied from the first preset memory to the second preset memory through the DMA communication channel;
a first memory determining module, configured to determine, through the first operating system based on the target application information, the second preset memory corresponding to the access request;
a second application determining module, configured to extract, through the second operating system, the target application information from the access request before the processing result of the access request is copied from the third preset memory to the fourth preset memory through the DMA communication channel; and
a second memory determining module, configured to determine, through the second operating system based on the target application information, the fourth preset memory corresponding to the processing result.

Based on the first example of the second aspect, in a seventh example of the second aspect, the virtual machine includes a virtual machine applied to a secure container scenario.

In a third aspect, according to one or more embodiments of the present disclosure, an electronic device is provided, including: at least one processor and a memory.

The memory stores computer-executable instructions.

The at least one processor executes the computer-executable instructions stored in the memory, to cause the electronic device to implement the method according to any one of the first aspect.

In a fourth aspect, according to one or more embodiments of the present disclosure, a computer-readable storage medium is provided, where the computer-readable storage medium stores computer-executable instructions, and when a processor executes the computer-executable instructions, a computing device is caused to implement the method according to any one of the first aspect.

In a fifth aspect, according to one or more embodiments of the present disclosure, a computer program is provided, and the computer program is used to implement the method according to any one of the first aspect.

The foregoing descriptions are merely preferred embodiments of the present disclosure and explanations of the applied technical principles. Persons skilled in the art should understand that the scope of disclosure involved in the present disclosure is not limited to the technical solution formed by a specific combination of the foregoing technical features, and shall also cover other technical solutions formed by any combination of the foregoing technical features without departing from the scope of the appended claims. For example, the technical solution may be formed by replacing the foregoing features with technical features with similar functions disclosed in the present disclosure (but not limited thereto).

In addition, although the operations are depicted in a specific order, it should not be understood as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments may also be implemented in combination in a single embodiment. In contrast, various features described in the context of a single embodiment may also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An offloading method for a shared directory file system between a host and a virtual machine, **characterized in that** the method comprises:
offloading (S201, S301) a virtual machine user file system, VIRTIOFS, process on a host to a data processing unit, DPU, to cause the DPU to be responsible for running the VIRTIOFS process and maintaining a shared directory file system related to the VIRTIOFS process;
in a case that the VIRTIOFS process on the host is offloaded to the DPU, establishing (S202, S302), through a direct memory access, DMA, driver front-end controller configured in a first operating system in the host and a DMA driver back-end controller configured in a second operating system in the DPU, a DMA communication channel for the VIRTIOFS process to communicate with the virtual machine on the host; and
controlling (S203), through the DPU, the VIRTIOFS process to communicate with the virtual machine deployed on the host based on the DMA communication channel, to implement access to and data processing of the shared directory file system.

2. The method according to claim 1, wherein the controlling (S203), through the DPU, the VIRTIOFS process to communicate with the virtual machine deployed on the host based on the DMA communication channel comprises:
setting (S303) a first preset memory in the first operating system, and setting a second preset memory in the second operating system; and
copying (S306) an access request of the virtual machine from the first preset memory to the second preset memory through the DMA communication channel, to forward, through the second operating system, the access request to the VIRTIOFS process, to cause the VIRTIOFS process to access the shared directory file system.

3. The method according to claim 2, wherein the method further comprises:
setting (S307) a third preset memory in the second operating system, and setting a fourth preset memory in the first operating system; and
copying (S310) a processing result of the access request from the third preset memory to the fourth preset memory through the DMA communication channel, to forward, through the first operating system, the processing result to the virtual machine.

4. The method according to claim 2, wherein the forwarding, through the second operating system, the access request to the VIRTIOFS process comprises:
converting, through a virtual machine monitor process of the second operating system, the access request into an inter-process communication request based on the second operating system, to send to the VIRTIOFS process.

5. The method according to any one of claims 1 to 4, wherein the DMA driver front-end controller is a kernel program of the first operating system, and the DMA driver back-end controller is a kernel program of the second operating system.

6. The method according to claim 3, wherein before the copying (S306) the access request of the virtual machine from the first preset memory to the second preset memory through the DMA communication channel, the method further comprises:
extracting (S304), through the first operating system, target application information from the access request; and
determining (S305), through the first operating system based on the target application information, the second preset memory corresponding to the access request; and
before the copying (310) the processing result of the access request from the third preset memory to the fourth preset memory through the DMA communication channel, the method further comprises:
extracting (S308), through the second operating system, the target application information from the access request; and
determining (S309), through the second operating system based on the target application information, the fourth preset memory corresponding to the processing result.

7. The method according to claim 1, wherein the virtual machine comprises a virtual machine applied to a secure container scenario.

8. An offloading apparatus (400) for a shared directory file system between a host and a virtual machine, **characterized in that** the apparatus comprises:
an offloading module (401), configured to offload a virtual machine user file system, VIRTIOFS, process on a host to a data processing unit, DPU, to cause the DPU to be responsible for running the VIRTIOFS process and maintaining a shared directory file system related to the VIRTIOFS process;
a channel establishing module (402), configured to, in a case that the VIRTIOFS process on the host is offloaded to the DPU, establish, through a direct memory access, DMA, driver front-end controller configured in a first operating system in the host and a DMA driver back-end controller configured in a second operating system in the DPU, a DMA communication channel for the VIRTIOFS process to communicate with the virtual machine on the host; and
an access processing module (403), configured to control, through the DPU, the VIRTIOFS process to communicate with the virtual machine deployed on the host based on the DMA communication channel, to implement access to and data processing of the shared directory file system.

9. The offloading apparatus (400) according to claim 8, wherein the access processing module (403) is further configured to:
set a first preset memory in the first operating system, and set a second preset memory in the second operating system; and copy an access request of the virtual machine from the first preset memory to the second preset memory through the DMA communication channel, to forward, through the second operating system, the access request to the VIRTIOFS process, to cause the VIRTIOFS process to access the shared directory file system.

10. The offloading apparatus (400) according to claim 9, wherein the access processing module (403) is further configured to:
set a third preset memory in the second operating system, and set a fourth preset memory in the first operating system; and copy a processing result of the access request from the third preset memory to the fourth preset memory through the DMA communication channel, to forward, through the first operating system, the processing result to the virtual machine.

11. The offloading apparatus (400) according to any one of claims 8 to 10, the DMA driver front-end controller is a kernel program of the first operating system, and the DMA driver back-end controller is a kernel program of the second operating system.

12. The offloading apparatus (400) according to claim 10, wherein the apparatus further comprises:
a first application determining module, configured to extract, through the first operating system, target application information from the access request before the access request of the virtual machine is copied from the first preset memory to the second preset memory through the DMA communication channel;
a first memory determining module, configured to determine, through the first operating system based on the target application information, the second preset memory corresponding to the access request;
a second application determining module, configured to extract, through the second operating system, the target application information from the access request before the processing result of the access request is copied from the third preset memory to the fourth preset memory through the DMA communication channel; and
a second memory determining module, configured to determine, through the second operating system based on the target application information, the fourth preset memory corresponding to the processing result.

13. The offloading apparatus (400) according to claim 12, wherein the virtual machine comprises a virtual machine applied to a secure container scenario.

14. An electronic device (600), comprising: at least one processor (601) and a memory (602);
wherein the memory (602) stores computer-executable instructions; and
the at least one processor (601) executes the computer-executable instructions stored in the memory, to cause the electronic device to implement the method according to any one of claims 1 to 7.

15. A computer-readable storage medium, wherein the computer-readable storage medium stores computer-executable instructions, and when a processor executes the computer-executable instructions, a computing device is caused to implement the method according to any one of claims 1 to 7.

## Patentansprüche

1. Entladeverfahren für ein gemeinsam genutztes Verzeichnisdateisystem zwischen einem Host und einer virtuellen Maschine, **dadurch gekennzeichnet, dass** das Verfahren Folgendes umfasst:
Entladen (S201, S301) eines virtuellen Maschinen-Benutzerdateisystems, VIRTIOFS-Prozesses auf einem Host an eine Datenverarbeitungseinheit, DPU, um die DPU zu veranlassen, für die Ausführung den VIRTIOFS-Prozess und die Verwaltung eines gemeinsamen Verzeichnisdateisystems im Zusammenhang mit dem VIRTIOFS-Prozess verantwortlich zu sein;
falls der VIRTIOFS-Prozess auf dem Host auf die DPU entladen wird, Einrichten (S202, S302), über einen direkten Speicherzugriff, DMA, in einem ersten Betriebssystem auf dem Host konfigurierten Treiber-Frontend-Controller und einen in einem zweiten Betriebssystem auf der DPU konfigurierten DMA-Treiber-Backend-Controller, eines DMA-Kommunikationskanal für den VIRTIOFS-Prozess zur Kommunikation mit der virtuellen Maschine auf dem Host; und
Steuern (S203) durch die DPU, des VIRTIOFS-Prozesses, um mit der auf dem Host bereitgestellten virtuellen Maschine basierend auf dem DMA-Kommunikationskanal zu kommunizieren, um den Zugriff auf das und die Datenverarbeitung des gemeinsam genutzten Verzeichnisdateisystems auszuführen.

2. Verfahren nach Anspruch 1, wobei das Steuern (S203) des VIRTIOFS-Prozesses, über die DPU, um mit der auf dem Host bereitgestellten virtuellen Maschine basierend auf dem DMA-Kommunikationskanal umfasst:
Festlegen (S303) eines ersten voreingestellten Speichers im ersten Betriebssystem und Festlegen eines zweiten voreingestellten Speichers im zweiten Betriebssystem; und
Kopieren (S306) einer Zugriffsanforderung der virtuellen Maschine vom ersten voreingestellten Speicher in den zweiten voreingestellten Speicher über den DMA-Kommunikationskanal, um die Zugriffsanforderung über das zweite Betriebssystem an den VIRTIOFS-Prozess weiterzuleiten, damit der VIRTIOFS-Prozess veranlasst wird, auf das gemeinsam genutzte Verzeichnisdateisystem zuzugreifen.

3. Verfahren nach Anspruch 2, wobei das Verfahren ferner umfasst:
Festlegen (S307) eines dritten voreingestellten Speichers im zweiten Betriebssystem und Festlegen eines vierten voreingestellten Speichers im ersten Betriebssystem; und
Kopieren (S310) eines Verarbeitungsergebnisses der Zugriffsanforderung vom dritten voreingestellten Speicher in den vierten voreingestellten Speicher über den DMA-Kommunikationskanal, um das Verarbeitungsergebnis über das erste Betriebssystem an die virtuelle Maschine weiterzuleiten.

4. Verfahren nach Anspruch 2, wobei das Weiterleiten der Zugriffsanforderung an den VIRTIOFS-Prozess über das zweite Betriebssystem Folgendes umfasst:
Umwandeln, durch eines virtuellen Maschinenüberwachungsprozess des zweiten Betriebssystems, der Zugriffsanforderung in eine Interprozesskommunikationsanforderung basierend auf dem zweiten Betriebssystem, die an den VIRTIOFS-Prozess gesendet wird.

5. Verfahren nach einem der Ansprüche 1 bis 4, wobei der DMA-Treiber-Frontend-Controller ein Kernelprogramm des ersten Betriebssystems ist, und der DMA-Treiber-Backend-Controller ein Kernelprogramm des zweiten Betriebssystems ist.

6. Verfahren nach Anspruch 3, wobei vor dem Kopieren (S306) der Zugriffsanforderung der virtuellen Maschine vom ersten voreingestellten Speicher in den zweiten voreingestellten Speicher über den DMA-Kommunikationskanal, das Verfahren ferner umfasst:
Extrahieren (S304) von Zielanwendungsinformationen aus der Zugriffsanforderung über das erste Betriebssystem; und
Bestimmen (S305) durch das erste Betriebssystem basierend auf den Zielanwendungsinformationen, dem zweiten voreingestellten Speicher, der der Zugriffsanforderung entspricht; und
vor dem Kopieren (310) des Verarbeitungsergebnisses der Zugriffsanforderung vom dritten voreingestellten Speicher in den vierten voreingestellten Speicher über den DMA-Kommunikationskanal, das Verfahren ferner umfasst:
Extrahieren (S308) der Zielanwendungsinformationen aus der Zugriffsanforderung über das zweite Betriebssystem; und
Bestimmen (S309) über das zweite Betriebssystem basierend auf den Zielanwendungsinformationen, des vierten voreingestellten Speichers, der dem Verarbeitungsergebnis entspricht.

7. Verfahren nach Anspruch 1, wobei die virtuelle Maschine eine virtuelle Maschine umfasst, die in einem sicheren Container-Szenario eingesetzt wird.

8. Entladeeinrichtung (400) für ein gemeinsam genutztes Verzeichnisdateisystem zwischen einem Host und einer virtuellen Maschine, **dadurch gekennzeichnet, dass** die Einrichtung Folgendes umfasst:
ein Entlademodul (401), das so konfiguriert ist, dass es einen virtuellen Maschinen-Benutzerdateisystems, VIRTIOFS,-Prozesses, VIRTIOFS, auf einem Host an eine Datenverarbeitungseinheit, DPU, entladet, um die DPU zu veranlassen, für die Ausführung des VIRTIOFS-Prozesses und die Verwaltung eines gemeinsamen Verzeichnisdateisystems im Zusammenhang mit dem VIRTIOFS-Prozess verantwortlich zu sein;
ein Kanalaufbaumodul (402), das so konfiguriert ist, dass es falls der VIRTIOFS-Prozess auf dem Host auf die DPU entladen wird, über einen direkten Speicherzugriff, DMA, in einem ersten Betriebssystem auf dem Host konfigurierten Treiber-Frontend-Controller und einen in einem zweiten Betriebssystem auf der DPU konfigurierten DMA-Treiber-Backend-Controller, eines DMA-Kommunikationskanal für den VIRTIOFS-Prozess zur Kommunikation mit der virtuellen Maschine auf dem Host; und
ein Zugriffsverarbeitungsmodul (403), das so konfiguriert ist, dass es über die DPU den VIRTIOFS-Prozess steuert, um mit der auf dem Host bereitgestellten virtuellen Maschine basierend auf dem DMA-Kommunikationskanal zu kommunizieren, um den Zugriff auf das und die Datenverarbeitung des gemeinsam genutzten Verzeichnisdateisystems auszuführen.

9. Entladeeinrichtung (400) nach Anspruch 8, wobei das Zugriffsverarbeitungsmodul (403) ferner konfiguriert ist, zum:
Festlegen im ersten Betriebssystem eines ersten voreingestellten Speicher, und Festlegen im zweiten Betriebssystem eines zweiten voreingestellten Speicher; und Kopieren einer Zugriffsanforderung der virtuellen Maschine vom ersten voreingestellten Speicher in den zweiten voreingestellten Speicher über den DMA-Kommunikationskanal, um die Zugriffsanforderung über das zweite Betriebssystem an den VIRTIOFS-Prozess weiterzuleiten, damit der VIRTIOFS-Prozess veranlasst wird, auf das gemeinsam genutzte Verzeichnisdateisystem zuzugreifen.

10. Entladeeinrichtung (400) nach Anspruch 9, wobei das Zugriffsverarbeitungsmodul (403) ferner konfiguriert ist, zum:
Festlegen im zweiten Betriebssystem eines dritten voreingestellten Speichers und Festlegen im ersten Betriebssystem eines vierten voreingestellten Speichers; und Kopieren eines Verarbeitungsergebnis der Zugriffsanforderung vom dritten voreingestellten Speicher in den vierten voreingestellten Speicher über den DMA-Kommunikationskanal um, über das erste Betriebssystem, das Verarbeitungsergebnis an die virtuelle Maschine weiterzuleiten.

11. Entladeeinrichtung (400) nach einem der Ansprüche 8 bis 10, wobei der DMA-Treiber-Frontend-Controller ein Kernelprogramm des ersten Betriebssystems ist, und der DMA-Treiber-Backend-Controller ein Kernelprogramm des zweiten Betriebssystems ist.

12. Entladeeinrichtung (400) nach Anspruch 10, wobei die Entladeeinrichtung ferner Folgendes umfasst:
ein erstes Anwendungsbestimmungsmodul, das so konfiguriert ist, dass es, über das erste Betriebssystem, Zielanwendungsinformationen aus der Zugriffsanforderung extrahiert, bevor die Zugriffsanforderung der virtuellen Maschine vom ersten voreingestellten Speicher in den zweiten voreingestellten Speicher über den DMA-Kommunikationskanal kopiert wird;
ein erstes Speicherbestimmungsmodul, das so konfiguriert ist, dass es, über das erste Betriebssystem basierend auf den Zielanwendungsinformationen, den zweiten voreingestellten Speicher bestimmt, der der Zugriffsanforderung entspricht;
ein zweites Anwendungsbestimmungsmodul, das so konfiguriert ist, dass es, über das zweite Betriebssystem, die Zielanwendungsinformationen aus der Zugriffsanforderung extrahiert, bevor das Verarbeitungsergebnis der Zugriffsanforderung vom dritten voreingestellten Speicher in den vierten voreingestellten Speicher über den DMA-Kommunikationskanal kopiert wird; und
ein zweites Speicherbestimmungsmodul, das so konfiguriert ist, dass es, über das zweite Betriebssystem basierend auf den Zielanwendungsinformationen, den vierten voreingestellten Speicher bestimmt, der dem Verarbeitungsergebnis entspricht.

13. Entladeeinrichtung (400) nach Anspruch 12, wobei die virtuelle Maschine eine virtuelle Maschine umfasst, die in einem sicheren Container-Szenario eingesetzt wird.

14. Elektronische Vorrichtung (600), umfassend: mindestens einen Prozessor (601) und einen Speicher (602);
wobei der Speicher (602) computerausführbare Anweisungen speichert; und
der mindestens eine Prozessor (601) die im Speicher gespeicherten computerausführbaren Anweisungen ausführt, um die elektronische Vorrichtung zu veranlassen, das Verfahren nach einem der Ansprüche 1 bis 7 auszuführen.

15. Computerlesbares Speichermedium, wobei das computerlesbare Speichermedium computerausführbare Anweisungen speichert, und wenn ein Prozessor die computerausführbaren Anweisungen ausführt, eine Computervorrichtung veranlasst wird, das Verfahren nach einem der Ansprüche 1 bis 7 auszuführen.

## Revendications

1. Procédé de délestage d'un système de fichiers de répertoire partagé entre un hôte et une machine virtuelle, **caractérisé en ce que** le procédé comprend :
le délestage (S201, S301) d'un processus de système de fichiers utilisateur de machine virtuelle, VIRTIOFS, sur un hôte vers une unité de traitement de données, DPU, pour que la DPU soit chargée de l'exécution du processus VIRTIOFS et de la maintenance d'un système de fichiers de répertoire partagé lié au processus VIRTIOFS ;
dans un cas où le processus VIRTIOFS sur l'hôte est délesté vers la DPU, l'établissement (S202, S302), via un dispositif de commande frontal de pilote d'accès direct à la mémoire, DMA, configuré dans un premier système d'exploitation sur l'hôte et un dispositif de commande dorsal de pilote DMA configuré dans un second système d'exploitation sur la DPU, d'un canal de communication DMA permettant au processus VIRTIOFS de communiquer avec la machine virtuelle sur l'hôte ; et
la commande (S203), via la DPU, du processus VIRTIOFS pour communiquer avec la machine virtuelle déployée sur l'hôte sur la base du canal de communication DMA, pour implémenter un accès à et un traitement de données du système de fichiers de répertoire partagé.

2. Procédé selon la revendication 1, dans lequel la commande (S203), via la DPU, du processus VIRTIOFS pour communiquer avec la machine virtuelle déployée sur l'hôte sur la base du canal de communication DMA, comprend :
le réglage (S303) d'une première mémoire préréglée dans le premier système d'exploitation, et le régler d'une deuxième mémoire préréglée dans le second système d'exploitation ; et
la copie (S306) d'une demande d'accès de la machine virtuelle de la première mémoire préréglée à la deuxième mémoire préréglée via le canal de communication DMA, pour transmettre, via le second système d'exploitation, la demande d'accès au processus VIRTIOFS, afin d'amener le processus VIRTIOFS à accéder au système de fichiers de répertoire partagé.

3. Procédé selon la revendication 2, dans lequel le procédé comprend en outre :
le réglage (S307) d'une troisième mémoire préréglée dans le second système d'exploitation, et le réglage d'une quatrième mémoire préréglée dans le premier système d'exploitation ; et
la copie (S310) d'un résultat de traitement de la demande d'accès de la troisième mémoire préréglée à la quatrième mémoire préréglée via le canal de communication DMA, pour transmettre, via le premier système d'exploitation, le résultat de traitement à la machine virtuelle.

4. Procédé selon la revendication 2, dans lequel la transmission, via le second système d'exploitation, de la demande d'accès au processus VIRTIOFS comprend :
la converson, via un processus de surveillance de machine virtuelle du second système d'exploitation, de la demande d'accès en une demande de communication inter-processus sur la base du second système d'exploitation, à envoyer au processus VIRTIOFS.

5. Procédé selon l'une quelconque des revendications 1 à 4, dans lequel le dispositif de commande frontal de pilote DMA est un programme noyau du premier système d'exploitation, et le dispositif de commande dorsal de pilote DMA est un programme noyau du second système d'exploitation.

6. Procédé selon la revendication 3, dans lequel, avant la copie (S306) de la demande d'accès de la machine virtuelle de la première mémoire préréglée à la deuxième mémoire préréglée via le canal de communication DMA, le procédé comprend en outre :
l'extraction (S304), via le premier système d'exploitation, des informations d'application cible à partir de la demande d'accès ; et
la détermination (S305), via le premier système d'exploitation sur la base des informations d'application cible, de la deuxième mémoire préréglée correspondant à la demande d'accès ; et
avant la copie (310) du résultat du traitement de la demande d'accès de la troisième mémoire préréglée à la quatrième mémoire préréglée via le canal de communication DMA, le procédé comprend en outre :
l'extraction (S308), via le second système d'exploitation, des informations d'application cible à partir de la demande d'accès ; et
la détermination (S309), via le second système d'exploitation sur la base des informations d'application cible, de la quatrième mémoire préréglée correspondant au résultat de traitement.

7. Procédé selon la revendication 1, dans lequel la machine virtuelle comprend une machine virtuelle appliquée à un scénario de conteneur sécurisé.

8. Appareil de délestage (400) pour un système de fichiers de répertoire partagé entre un hôte et une machine virtuelle, **caractérisé en ce que** l'appareil comprend :
un module de délestage (401), configuré pour délester un processus de système de fichiers utilisateur de machine virtuelle, VIRTIOFS, sur un hôte vers une unité de traitement de données, DPU, pour que la DPU soit chargée de l'exécution du processus VIRTIOFS et de la maintenance d'un système de fichiers de répertoire partagé lié au processus VIRTIOFS ;
un module d'établissement de canal (402), configuré pour, dans un cas où le processus VIRTIOFS sur l'hôte est délesté vers la DPU, établir, via un dispositif de commande frontal de pilote d'accès direct à la mémoire, DMA, configuré dans un premier système d'exploitation sur l'hôte et un dispositif de commande dorsal de pilote DMA configuré dans un second système d'exploitation sur la DPU, un canal de communication DMA permettant au processus VIRTIOFS de communiquer avec la machine virtuelle sur l'hôte ; et
un module de traitement d'accès (403), configuré pour commander, via la DPU, le processus VIRTIOFS pour communiquer avec la machine virtuelle déployée sur l'hôte sur la base du canal de communication DMA, pour implémenter un accès à et un traitement de données du système de fichiers de répertoire partagé.

9. Appareil de délestage (400) selon la revendication 8, dans lequel le module de traitement d'accès (403) est en outre configuré pour :
régler une première mémoire préréglée dans le premier système d'exploitation et une deuxième mémoire préréglée dans le second système d'exploitation ; puis copier une demande d'accès de la machine virtuelle de la première mémoire préréglée vers la deuxième mémoire préréglée via le canal de communication DMA, afin de transmettre, via le second système d'exploitation, la demande d'accès au processus VIRTIOFS, pour permettre à ce dernier d'accéder au système de fichiers de répertoire partagé.

10. Appareil de délestage (400) selon la revendication 9, dans lequel le module de traitement d'accès (403) est en outre configuré pour :
régler une troisième mémoire préréglée dans le second système d'exploitation et une quatrième mémoire préréglée dans le premier système d'exploitation ; puis copier un résultat de traitement de la demande d'accès de la troisième mémoire préréglée vers la quatrième mémoire préréglée via le canal de communication DMA, afin de le transmettre, via le premier système d'exploitation, le résultat de traitement à la machine virtuelle.

11. Appareil de délestage (400) selon l'une quelconque des revendications 8 à 10, le dispositif de commande frontal de pilote DMA étant un programme noyau du premier système d'exploitation, et le dispositif de commande dorsal de pilote DMA étant un programme noyau du second système d'exploitation.

12. Appareil de délestage (400) selon la revendication 10, dans lequel l'appareil comprend en outre :
un premier module de détermination d'application, configuré pour extraire, via le premier système d'exploitation, des informations d'application cible à partir de la demande d'accès avant que la demande d'accès de la machine virtuelle ne soit copiée de la première mémoire préréglée à la deuxième mémoire préréglée via le canal de communication DMA ;
un premier module de détermination de mémoire, configuré pour déterminer, via le premier système d'exploitation sur la base des informations d'application cible, la deuxième mémoire préréglée correspondant à la demande d'accès ;
un second module de détermination d'application, configuré pour extraire, via le second système d'exploitation, les informations d'application cible à partir de la demande d'accès avant que le résultat de traitement de la demande d'accès ne soit copié de la troisième mémoire préréglée à la quatrième mémoire préréglée via le canal de communication DMA ; et
un second module de détermination de mémoire, configuré pour déterminer, via le second système d'exploitation sur la base des informations d'application cible, la quatrième mémoire préréglée correspondant au résultat de traitement.

13. Appareil de délestage (400) selon la revendication 12, dans lequel la machine virtuelle comprend une machine virtuelle appliquée à un scénario de conteneur sécurisé.

14. Dispositif électronique (600), comprenant : au moins un processeur (601) et une mémoire (602) ;
dans lequel la mémoire (602) stocke des instructions exécutables par ordinateur ; et
le au moins un processeur (601) exécute les instructions exécutables par ordinateur stockées dans la mémoire, pour amener le dispositif électronique à mettre en œuvre le procédé selon l'une quelconque des revendications 1 à 7.

15. Support de stockage lisible par ordinateur, dans lequel le support de stockage lisible par ordinateur stocke des instructions exécutables par ordinateur, et lorsqu'un processeur exécute les instructions exécutables par ordinateur, un dispositif informatique est amené à mettre en œuvre le procédé selon l'une quelconque des revendications 1 à 7.
